(19) Europäisches Patentamt
European Patent Office
Office européen des brevets

(11) **EP 4 439 701 A1**

## (12) EUROPEAN PATENT APPLICATION

(43) Date of publication:
**02.10.2024 Bulletin 2024/40**

(21) Application number: **23210512.2**

(22) Date of filing: **17.11.2023**

(51) International Patent Classification (IPC):
*H01M 4/133* (2010.01)    *H01M 4/134* (2010.01)
*H01M 4/1393* (2010.01)    *H01M 4/1395* (2010.01)
*H01M 4/36* (2006.01)    *H01M 4/38* (2006.01)
*H01M 10/0525* (2010.01)    *H01M 4/02* (2006.01)

(52) Cooperative Patent Classification (CPC):
**H01M 4/133; H01M 4/134; H01M 4/1393;
H01M 4/1395; H01M 4/362; H01M 4/386;
H01M 10/0525;** H01M 2004/021; H01M 2004/027

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.03.2023 CN 202310320127**

(71) Applicant: **AESC Japan Ltd.
Kanagawa, 2520012 (JP)**

(72) Inventor: **LI, Ruonan
Pudong New Area Shanghai, 201315 (CN)**

(74) Representative: **Becker, Eberhard
Becker Kurig & Partner
Patentanwälte mbB
Bavariastraße 7
80336 München (DE)**

(54) **SILICON-CARBON COMPOSITE MATERIAL AND PREPARATION METHOD THEREOF, ELECTROCHEMICAL DEVICE, ELECTRONIC DEVICE**

(57) Disclosed is a silicon-carbon composite material, a preparation method thereof, an electrochemical device and an electronic device. The silicon-carbon composite material includes an amorphous carbon matrix and a silicon material located on the surface and/or in the interior the amorphous carbon matrix, and has specific surface area coefficient B is 20-1250. The preparation method includes synthesizing the amorphous carbon matrix material with silicon source through chemical vapor deposition to obtain the silicon-carbon composite material. The disclosure limits the expansion of the silicon-based material to the greatest possible extent, ensures its long cycle stability and excellent conductive properties, and effectively improves the capacity and first effect of the finished material. The material preparation process is simple and suitable for industrial production.

FIG. 1

EP 4 439 701 A1

**Description**

BACKGROUND

Technical Field

The disclosure relates to the technical field of secondary batteries, in particular to a silicon-carbon composite material and a preparation method thereof, an electrochemical device, and an electronic device.

Description of Related Art

With the increasing popularity of various portable electronic devices, as well as the rapid development of electric vehicles and renewable energy storage systems, nowadays the requirements imposed on the energy density, power density, cycle life and safety of lithium-ion batteries are higher than before. At present, the energy density of the common NCM ternary material (positive electrode)/graphite (negative electrode) system lithium-ion battery is close to its theoretical limit. In terms of negative electrode materials, the actual specific capacity of graphite (up to 360 mAh/g) is close to its theoretical specific capacity (372 mAh/g). Silicon has attracted extensive attention because of its much higher theoretical specific capacity (-3600 mAh/g) than graphite, low discharge platform (-0.2 V vs. Li + /Li), and abundant resources. However, there is a huge volume change in the silicon-based negative electrode material during the lithium insertion and removal process, which causes the material to be easily pulverized and broken, peeled off from the current collector, and has continuous interface side reactions, resulting in a rapid decline in the specific capacity of the material during the cycle, which limits the commercialization of silicon-based negative electrode materials.
In order to solve the above-mentioned problems, the structural design of silicon-based materials such as nanoscale, composite, and hollow/porous has become a popular research topic. Although the widely studied composite $SiO_x$ buffers the expansion of pure silicon materials to a certain extent, the first coulombic efficiency thereof is only about 75%. Even through pre-lithiation or graphite composition, the first coulombic efficiency thereof is only about 80% to 85%, which are all lower than the first efficiency of 88% of the positive electrode ternary layered material ($LiNi_xCo_yMn_{1-x-y}O_2$) and the first efficiency of 98% of the positive electrode lithium iron phosphate ($LiFePO_4$), which has no advantages compared with batteries with graphite as the negative electrode material. It is reported that the surface coating layer of the hollow/porous silicon material is often broken and crushed after a large pressure, and the space reserved for expansion inside the material is squeezed and released, and materials and batteries will still encounter large volume expansion during charging and discharging. The interface side reactions between materials and electrolyte will continue, and therefore the inherent advantages of materials no longer exist.

SUMMARY

In view of the above-mentioned shortcomings of the related art, the purpose of the present disclosure is to provide a silicon-carbon composite material and a preparation method thereof, negative electrode sheet, an electrochemical device, an electronic device, aiming to limit the expansion of silicon-based materials to the greatest possible extent structurally, so as to ensure its long-term cycle stability and excellent electrical conductivity, to solve the problems of low capacity and first effect of conventional silicon-based materials in the related art, and to ensure a certain degree of processing performance.
To achieve the above and other related objectives, the first aspect of the present disclosure provides a silicon-carbon composite material including an amorphous carbon matrix and a silicon material located on the surface and/or in the interior of the amorphous carbon matrix.
The silicon-carbon composite material satisfies the following relationship:

$$B=B_A/B_a.$$

The value range of B is 20 to 1250.
B is the specific surface area coefficient (i.e., BET coefficient) of the silicon-carbon composite material, $B_A$ is the specific surface area of the amorphous carbon matrix, and $B_a$ is the specific surface area of the silicon-carbon composite material.
Further, the value range B of the specific surface area coefficient of the silicon-carbon composite material is 100 to 900, and preferably 150 to 500.
Further, the range of the specific surface area $B_A$ of the amorphous carbon matrix is 500 $m^2/g$ to 2500 $m^2/g$,

preferably 800 m²/g to 1800 m²/g.

Further, the specific surface area $B_a$ of the silicon-carbon composite material ranges from 2 m²/g to 25 m²/g, preferably 2 m²/g to 8 m²/g.

Further, the silicon-carbon composite material satisfies the following relationship:

$$P_v = P_{v1}/P_{v2}.$$

The value range of $P_v$ is 0.4 to 120.

$P_v$ represents the pore volume coefficient of the silicon-carbon composite material, $P_{v1}$ represents the pore volume size of the amorphous carbon matrix, and $P_{v2}$ represents the pore volume size of the silicon-carbon composite material.

Further, the pore volume coefficient $P_v$ of the silicon-carbon composite material ranges from 1 to 100, preferably 10 to 90.

Further, the value range of the pore volume size $P_{v1}$ of the amorphous carbon matrix is 0.2 cm³/g to 0.9 cm³/g, preferably 0.2 cm³/g to 0.8 cm³/g, more preferably 0.2 cm³/g to 0.7 cm³/g.

Further, the range of the pore volume size $P_{v2}$ of the silicon-carbon composite material is 0.005 cm³/g to 0.2 cm³/g, preferably 0.008 cm³/g to 0.02 cm³/g.

Further, the thermal decomposition weight loss of the silicon-carbon composite material heated to 1400° C in an air atmosphere ranges from 5% to 60%, preferably 24 % to 42% or 15% to 40%.

The second aspect of the present disclosure provides a method for preparing a silicon-carbon composite material, including the following steps: synthesizing an amorphous carbon matrix material and a silicon source by chemical vapor deposition to obtain a silicon-carbon composite material, the silicon-carbon composite material includes an amorphous carbon matrix and a silicon material located on the surface and/or in the interior of the amorphous carbon matrix.

The silicon-carbon composite material satisfies the following relationship:

$$B = B_A/B_a.$$

The value range of B is 20 to 1250.

B is a specific surface area coefficient of the silicon-carbon composite material, $B_A$ is the specific surface area of the amorphous carbon matrix, and $B_a$ is the specific surface area of the silicon-carbon composite material.

Further, the silicon source is at least one selected from monosilane ($SiH_4$), dimethyldichlorosilane, trichloromethylsilane, tetramethylsilane, trichlorosilane, tetrachlorosilane, methyl silicate, and ethyl silicate.

Further, the amorphous carbon matrix material is porous amorphous carbon.

Further, the amorphous carbon matrix material is a porous amorphous carbon-metal composite, the porous amorphous carbon-metal composite includes a porous amorphous carbon matrix, and metal nanoparticles located on the surface and/or in the interior the porous amorphous carbon matrix.

The third aspect of the present disclosure provides a negative electrode sheet. The negative electrode sheet includes a negative electrode current collector and a negative electrode active substance layer disposed on the negative electrode current collector. The negative electrode active substance layer includes a negative electrode active material. The negative electrode active material includes the silicon-carbon composite material described in the first aspect and/or the silicon-carbon composite material prepared according to the method described in the second aspect.

The fourth aspect of the present disclosure provides an electrochemical device, including the negative electrode sheet as described in the third aspect.

A fifth aspect of the present disclosure provides an electronic device, including the electrochemical device as described in the fourth aspect.

As mentioned above, the silicon-carbon composite material and the preparation method thereof, the negative electrode sheet, the electrochemical device, and the electronic device of the present disclosure have the following advantageous effects.

In the present disclosure, the specific surface area coefficient B of silicon-carbon composites is controlled within the above range to ensure its long-term cycle stability and improve capacity and first effect. On the basis that the specific surface area of the silicon-carbon composite material is within a certain range, if the specific surface area coefficient is too high, the specific surface area of the amorphous carbon matrix is too large, which is not helpful for the uniformity of the introduction of subsequent silicon materials, and further deteriorates the subsequent cycle stability of silicon-carbon composites. If the specific surface area coefficient is too low, the specific surface area of the amorphous carbon matrix is too small, and the active sites where silicon is introduced into will be decreased, which will lead to a decrease in the amount of silicon added, and the capacity of the subsequent finished material will be low, which is not helpful for the realization of high energy density of the battery cell.

Keeping the pore volume coefficient $P_v$ of the silicon-carbon composite material and the pore volume of the silicon-carbon composite material and amorphous carbon within the above range will help control the content of subsequent silicon introduced, thereby controlling the capacity of the material, and helping to balance the energy density and cycle performance of the lithium-ion battery.

Controlling the content of various elements and thermal decomposition weight loss in the silicon-carbon composite material within the above range helps to ensure its long-term cycle stability, improve capacity and first effect. If the thermal decomposition weight loss is too high, the content of C is too high, it will be difficult to realize the high capacity of the material and the high energy density of the battery cell. If the thermal decomposition weight loss is too low, the content of Si is too high, it will be difficult to achieve better cycle stability.

In summary, the present disclosure limits the expansion of silicon-based materials to the greatest possible extent and ensures their long-term cycle stability and excellent electrical conductivity by controlling the structure, specific surface area coefficient B, pore volume coefficient $P_v$, content of various elements and thermal decomposition weight loss of the silicon-carbon composite material, thus effectively improving the capacity and first effect of the finished material, and maintaining a certain degree of processing performance, while promoting the commercialization process of silicon-based negative electrode materials. In the meantime, the preparation method of the silicon-carbon composite material of the present disclosure is simple and easy to operate. It is suitable for large-scale and industrial production. The silicon-carbon composite material provided by the disclosure may be used as a negative electrode active material and applied to the negative electrode active substance layer to make a negative electrode sheet, which is then assembled with the positive electrode sheet, separator, electrolyte, etc. to form electrochemical devices such as lithium-ion batteries, thereby significantly improving the electrical performance thereof.

BRIEF DESCRIPTION OF THE DRAWINGS

The FIGURE shows a schematic structural diagram of a silicon-carbon composite material in an embodiment of the present disclosure.

DESCRIPTION OF THE EMBODIMENTS

The implementation of the present disclosure is described below through specific examples, and those skilled in the art may easily understand other advantages and effects of the present disclosure from the content disclosed in this specification. The disclosure may also be implemented or applied through other different specific implementation modes, and the details in this specification may also be modified or changed based on different viewpoints and applications without departing from the spirit of the disclosure.

An embodiment of the present application provides a silicon-carbon composite material including an amorphous carbon matrix and a silicon material located on the surface and/or in the interior of the amorphous carbon matrix.

The silicon-carbon composite material satisfies the following relationship:

$$B = B_A/B_a.$$

The value range of B is 20 to 1250.

B is the specific surface area coefficient of the silicon-carbon composite material, $B_A$ is the specific surface area of the amorphous carbon matrix, and $B_a$ is the specific surface area of the silicon-carbon composite material.

In some embodiments, the value range of the specific surface area coefficient B of the silicon-carbon composite material is 100 to 900, more preferably 150 to 500; the value range of the specific surface area $B_A$ of the amorphous carbon matrix is 500 m²/g to 2500 m²/g, preferably 800 m²/g to 1800 m²/g; the value range of the specific surface area $B_a$ of the silicon-carbon composite material is 2 m²/g to 25 m²/g, and preferably 2 m²/g to 8 m²/g.

In the above-mentioned embodiments, controlling the specific surface area coefficient B of the silicon-carbon composite material within the above-mentioned range helps to ensure its long-term cycle stability, improve capacity and first effect. On the basis of a certain range of specific surface area of the silicon-carbon composite material, if the specific surface area coefficient is too high, the specific surface area of the amorphous carbon matrix is too large, which is helpful for the uniformity of the subsequent silicon material introduction, and then deteriorates the subsequent cycle stability of the silicon-carbon composite material. If the specific surface area coefficient is too low, the specific surface area of the amorphous carbon matrix is too small, and the active sites where the silicon is introduced into are reduced, which will lead to a reduction in the amount of silicon added, and the capacity of the subsequent finished material is low, which is not helpful for achieving a higher energy density of the battery cell.

In another embodiment of the present disclosure, the silicon-carbon composite material satisfies the following relationship:

$$P_v = P_{v1}/P_{v2}.$$

The value range of $P_v$ is 0.4 to 120.

$P_v$ represents the pore volume coefficient of the silicon-carbon composite material, $P_{v1}$ represents the pore volume size of the amorphous carbon matrix, and $P_{v2}$ represents the pore volume size of the silicon-carbon composite material.

In some embodiments, the value range of $P_v$ of the silicon-carbon composite material is 1 to 100, preferably 10 to 90. The pore volume size Pv1 of the amorphous carbon matrix is 0.2 $cm^3/g$ to 0.9 $cm^3/g$, preferably 0.2 $cm^3/g$ to 0.8 $cm^3/g$, more preferably 0.2 $cm^3/g$ to 0.7 $cm^3/g$; the pore volume size $P_{v2}$ of the silicon-carbon composite material is 0.005 $cm^3/g$ to 0.2 $cm^3/g$, preferably 0.008 $cm^3/g$ to 0.02 $cm^3/g$.

In the above embodiments, keeping the pore volume coefficient of the silicon-carbon composite material and the pore volume of the silicon-carbon composite material and amorphous carbon within the above-mentioned range helps to control the content of subsequent silicon introduction, thereby controlling the capacity of the material, which helps balance the energy density and cycle performance of lithium-ion batteries.

In another embodiment of the present disclosure, the thermal decomposition weight loss of the silicon-carbon composite material heated in an air atmosphere up to 1400°C ranges from 5% to 60%, preferably 24% to 42% or 15% to 40%.

In another embodiment of the present disclosure, in the silicon-carbon composite material, the mass ratio of carbon to silicon is 3 to 8 : 2 to 7.

In the above embodiments, controlling the content of various elements in the silicon-carbon composite material and the thermal decomposition weight loss within the above range helps to ensure its long-term cycle stability, improve capacity and first effect. If the thermal decomposition weight loss is too high, the content of C is too high, it will be difficult to achieve high capacity of the material and high energy density of the battery cell. If the thermal decomposition weight loss is too low, the content of Si is too high, it will be difficult to realize better cycle stability.

In some embodiments, the amorphous carbon matrix is a porous carbon material, and the silicon material is uniformly distributed on the surface and/or pore walls of the amorphous carbon matrix. The FIGURE shows a schematic structural diagram of a silicon-carbon composite material provided by an embodiment of the present disclosure. The amorphous carbon matrix is a porous carbon material, and the silicon material is uniformly distributed on the pore walls of the amorphous carbon matrix.

In some embodiments, the silicon material is at least one selected from Si and $SiO_x$.

In some embodiments, the silicon material is nanoscale; further, the particle size of the silicon material is 1 nm to 20 nm, preferably 1 nm to 5 nm.

In some embodiments, the silicon material is rod-shaped and/or granular, including but not limited to spherical, quasi-spherical, or needle-shaped particles.

In another embodiment of the present disclosure, the silicon-carbon composite material further includes nano-metal particles attached to the surface and/or inside of the amorphous carbon matrix. In some embodiments, the amorphous carbon matrix is a porous carbon material, and the nano-metals are uniformly distributed on the surface and/or pore walls of the amorphous carbon matrix. The mass ratio of the nano-metal particles in the silicon-carbon composite material may be 0 % to 2%, excluding 0. The nano metal particles are at least one selected from titanium, iron, copper, nickel, cobalt, manganese, silver, gold and tin particles; the particle size of the nano metal particles is 2 nm to 5nm.

An embodiment of the present disclosure provides a method for preparing a silicon-carbon composite material, including the following steps: synthesizing an amorphous carbon matrix material and a silicon source by chemical vapor deposition to obtain a silicon-carbon composite material, the silicon-carbon composite material includes an amorphous carbon matrix and a silicon material located on the surface and/or in the interior of the amorphous carbon matrix.

The silicon-carbon composite material satisfies the following relationship:

$$B = B_A/B_a.$$

The value range of B is 20 to 1250.

B is the specific surface area coefficient of the silicon-carbon composite material, $B_A$ is the specific surface area of the amorphous carbon matrix, and $B_a$ is the specific surface area of the silicon-carbon composite material.

In some embodiments, the silicon source is at least one selected from monosilane ($SiH_4$), dimethyldichlorosilane, and trichloromethylsilane.

In some embodiments, the amorphous carbon matrix material is porous amorphous carbon.

In some embodiments, the amorphous carbon matrix material is a porous amorphous carbon-metal composite, the porous amorphous carbon-metal composite includes a porous amorphous carbon matrix, and nano metal particles attached to the surface and/or inside of the porous amorphous carbon matrix.

In some embodiments, the preparation method of the porous amorphous carbon-metal composite includes the following steps: attaching metal nanoparticles to the surface and/or inside of the porous amorphous carbon matrix by mechanical mixing (such as stirring), liquid phase reduction, or gas phase reduction. Preferably, the nano metal particles are at least one selected from titanium, iron, copper, nickel, cobalt, manganese, silver, gold and tin particles. Specifically, in the examples of the present disclosure, mechanical mixing method, liquid phase reduction method, and gas phase reduction method adopted for attaching nano-metal particles to the surface and/or inside of the porous amorphous carbon matrix are carried out based on the known technology of the related art, and no special requirement is applied. Therefore, no further details are repeated.

In another embodiment of the present disclosure, the method for preparing a silicon-carbon composite material includes the following steps: placing an amorphous carbon matrix material and a silicon source in a chemical vapor deposition reaction furnace, using hydrogen as a carrier gas, and using hydrogen and/or argon as a diluent gas, the flow rate is 1 L/min to 5 L/min, the temperature is raised to 400°C to 600°C, the reaction is performed for 1 hours to 20 hours, and the silicon-carbon composite material is obtained by thermal decomposition and synthesis.

It should be noted that the silicon-carbon composite material described in the above examples may be prepared by the method described in the above examples, but is not limited thereto.

An embodiment of the present disclosure provides a negative electrode sheet. The negative electrode sheet includes a negative electrode current collector and a negative electrode active substance layer disposed on the negative electrode current collector. The negative electrode active substance layer includes a negative electrode active material, the negative electrode active material includes the silicon-carbon composite material as described in the above-mentioned embodiments and/or the silicon-carbon composite material prepared according to the method described in the above-mentioned embodiments. In some embodiments, in terms of mass percentage, the negative electrode active material includes 24% to 45% of silicon-carbon composite material.

An embodiment of the present disclosure provides an electrochemical device including the negative electrode sheet as described in the above embodiments, a positive electrode sheet, a separator, and an electrolyte.

The electrochemical device in the embodiments of the present disclosure may be any electrochemical device, such as but not limited to lithium-ion battery and sodium-ion battery.

The positive electrode sheet generally includes a positive electrode current collector and a positive electrode active substance layer disposed on the positive electrode current collector, and the positive electrode active substance layer includes a positive electrode active material.

The positive electrode active material may generally be a lithium-containing composite oxide. Specific examples may include $LiMnO_2$, $LiFeO_2$, $LiMn_2O_4$, $Li_2FeSiO_4$, $LiNi_{1/3}Co_{1/3}Mn_{1/3}O_2$, $LiNi_5CO_2Mn_3O_2$, $Li_zNi_{(1-x-y)}Co_xM_yO_2$ (where $0.01 \leq x \leq 0.20$, $0 \leq y \leq 0.20$, $0.97 < z < 1.20$, M represents at least one element selected from Mn, V, Mg, Mo, Nb and Al), $LiFePO_4$ and $Li_zCO_{(1-x)}M_xO_2$ (where $0 \leq x \leq 0.1$, $0.97 \leq z \leq 1.20$, M represents at least one element selected from the group consisting of Mn, Ni, V, Mg, Mo, Nb, and Al).

Active materials are normally added with conductive agents and binders and other substances. The amount of addition may be adjusted from 1% to 50% of the total mass of positive electrode active materials, and from 55% to 76% of the total mass of the active materials according to different needs.

The conductive agent is a reagent used to ensure that the electrode has good charge and discharge performance, for example, including graphite materials such as natural graphite and artificial graphite, carbon black materials such as conductive carbon black (Super P), acetylene black, Ketjen black, channel black, furnace black, lamp black, thermal black and so on, conductive fibers such as carbon fiber and metal fiber, metal powders such as carbon fluoride powder, aluminum powder, nickel powder and so on, conductive whiskers such as zinc oxide, potassium titanate and so on, as well as conductive metal oxides such as titanium dioxide or polyphenylene derivatives.

The binder is a component that facilitates the bonding between the active material and the conductive agent and facilitates the bonding between the active material and the current collector. Normally, the binder may be selected from polyvinylidene fluoride, polyvinyl alcohol, polyacrylic acid (PAA), carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, styrene-propylene rubber, fluororubber and various copolymers.

The current collector serves as the base material for supporting the electrode active material, which is normally a metal foil with a thickness of 3 microns to 500 microns. There is no particular limitation on the material, as long as the material has high electrical conductivity and does not cause chemical reactions in the system of the secondary battery. For example, the material may be a foil material obtained by surface-treating nickel, titanium, aluminum, silver, stainless steel, carbon, or the like. The current collector usually has a smooth surface, but fine lines may also be formed on the surface thereof to improve the adhesion between the positive electrode active material and the current collector. In addition to the foil, the current collector may also be used in any one or combination of various forms such as film, mesh, porous, foam or non-woven fabric.

The separator is arranged between the positive electrode sheet and the negative electrode sheet, and an insulating film with high ion permeability and high mechanical strength is normally adopted. The separator typically has a thickness of 9 $\mu$m to 18 $\mu$m; a pore size of 5$\mu$m to 300 $\mu$m; an air permeability of 180 s/100 mL to 380 s/100 mL; and a porosity of 30% to 50%. The separator is formed by using a sheet or non-woven fabric made of an olefin polymer such as polypropylene; glass fiber or polyethylene, which is chemically resistant and hydrophobic.

Electrolytes used in Li-ion batteries generally include nonaqueous solvents, lithium salts, and additives.

The non-aqueous solvent may be a conventional non-aqueous solvent in the field, preferably an ester solvent, more preferably a carbonate solvent. Specifically, the carbonate solvent may be at least one selected from ethylene carbonate, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC) and butylene carbonate (BC).

The lithium salt may be at least one selected from $LiPF_6$, $LiBF_4$, $LiN(SO_2F)_2$ (abbreviated as LiFSI), $LiClO_4$, $LiAsF_6$, $LiB(C_2O_4)_2$ (abbreviated as LiBOB), $LiBF_2(C_2O_4)$ (abbreviated as LiDFOB), $LiN(SO_2R_F)_2$, and $LiN(SO_2F)(SO_2R_F)$. Preferably, the content of lithium salt in the electrolyte is 5% to 20%.

Additives may be at least one selected from vinylene carbonate (VC), fluoroethylene carbonate (FEC), vinylethylene carbonate (VEC), vinyl sulfate (DTD), vinylene sulfate, 1,3-propane sultone (PS), propenyl sultone, and 1,4-butane sultone. The normal dosage of additives in the electrolyte is 1% to 4%, for example, 2%, of the electrolyte.

In some embodiments, the negative electrode active material includes the silicon-carbon composite material, the graphite, the conductive carbon black, and the binder; preferably, in terms of mass percentage, the negative electrode active material includes the silicon-carbon composite material in a content of 24% to 45%, the graphite in a content of 40% to 63%, the conductive carbon black in a content of 2% to 8% and the binder in a content of 2% to 18%.

In some embodiments, the preparation method of the negative electrode sheet described in the above embodiments includes the following steps:

The silicon-carbon composite material and graphite are mixed at a high speed with a mass ratio of 30 to 50 : 70 to 50 to prepare a blended negative electrode active substance powder, and then fully stirred and mixed with conductive carbon black and binder according to a mass ratio of 80 to 90 : 2 to 8: 2 to 18 in an appropriate amount of deionized water to form a uniform negative electrode slurry. The negative electrode slurry is coated on the surface of the copper foil of the negative electrode current collector, and dried and cold-pressed to obtain a negative electrode sheet.

It should be noted that the above-mentioned embodiments of the present disclosure do not describe in detail other process conditions and parameter details in the negative electrode sheet preparation process. Those skilled in the art may use the method described in the above-mentioned embodiments in combination with conventional technical means and common knowledge to obtain the negative electrode sheet.

An embodiment of the present disclosure provides an electronic device, including the electrochemical device as described in the above-mentioned embodiments.

The electronic device in the embodiment of the present disclosure is any electronic device, such as but not limited to a notebook computer, a pen input computer, a mobile computer, an e-book player, a portable phone, a portable fax machine, a portable copier, a portable printer, a head-mounted stereo headphones, video recorders, LCD TVs, portable cleaners, portable CD players, mini discs, transceivers, electronic organizers, calculators, memory cards, portable tape recorders, radios, backup power supplies, motors, cars, motorcycles, power-assisted bicycles, bicycles, lighting equipment, toys, game consoles, clocks, electric tools, flashlights, cameras, large household storage batteries, and lithium-ion capacitors. It should be noted that the electrochemical device of the present disclosure is not only applicable to the electronic devices listed above, but also applicable to energy storage power stations, marine vehicles, and air vehicles. Airlift vehicles include airborne vehicles within the atmosphere and airborne vehicles outside the atmosphere.

It should be noted that the above-mentioned embodiments of the present disclosure have not described in detail the assembly method and steps of the lithium-ion battery. Those skilled in the art can combine the positive electrode sheet and the negative electrode sheet according to conventional or common technical means and common knowledge in the field to assemble the positive electrode sheet, negative electrode sheet, electrolyte and separator to form a lithium-ion battery.

The following specific examples are given to illustrate the present disclosure in detail. It should also be understood that the following examples are only used to specifically illustrate the present disclosure, and should not be construed as limiting the protection scope of the present disclosure. Some non-essential improvements and adjustments made by those skilled in the art according to the above contents of the present disclosure all belong to the protection scope of the disclosure. The specific process parameters and the like in the following examples are only an example of the appropriate range, that is, those skilled in the art can make a selection within the appropriate range through the description herein, and are not limited to the specific values exemplified below.

Example 1

In this example, a silicon-carbon composite material was prepared, and the specific preparation process was as follows:

500 g of porous amorphous carbon material with a specific surface area of 1000 $m^2/g$ and a pore volume of 0.54 $cm^3/g$ was added into the fluidized bed, 10 L/min of nitrogen gas was introduced to make the material to achieve a fluidized state, and the fluidized bed was heated to 500°C. After the temperature was stabilized, 3 L/min of monosilane was introduced for 95 minutes, and the pressure of the fluidized bed was controlled at 6 kPa. Introduction of the monosilane gas was stopped, and the inert gas was continuously introduced until the reaction product was cooled to room temperature to obtain a silicon-carbon composite material.

Example 2

In this example, a silicon-carbon composite material was prepared, and the specific preparation process was as follows:

500 g of porous amorphous carbon material with a specific surface area of 800 $m^2/g$ and a pore volume of 0.54 $cm^3/g$ was added into the fluidized bed, 10 L/min of nitrogen gas was introduced to make the material to achieve a fluidized state, and the fluidized bed was heated to 500°C. After the temperature was stabilized, 2 L/min of monosilane was introduced for 95 minutes, and the pressure of the fluidized bed was controlled at 6 kPa. Introduction of the monosilane gas was stopped, and the inert gas was continuously introduced until the reaction product was cooled to room temperature to obtain a silicon-carbon composite material.

Example 3

In this example, a silicon-carbon composite material was prepared, and the specific preparation process was as follows:

500 g of porous amorphous carbon material with a specific surface area of 1000 $m^2/g$ and a pore volume of 0.2 $cm^3/g$ was added into the fluidized bed, 10 L/min of nitrogen gas was introduced to make the material to achieve a fluidized state, and the fluidized bed was heated to 500°C. After the temperature was stabilized, 5 L/min of monosilane was introduced for 95 minutes, and the pressure of the fluidized bed was controlled at 6 kPa. Introduction of the monosilane gas was stopped, and the inert gas was continuously introduced until the reaction product was cooled to room temperature to obtain a silicon-carbon composite material.

Example 4

In this example, a silicon-carbon composite material was prepared, and the specific preparation process was as follows:

500 g of porous amorphous carbon material with a specific surface area of 1200 $m^2/g$ and a pore volume of 0.7 $cm^3/g$ was added into the fluidized bed, 10 L/min of nitrogen gas was introduced to make the material to achieve a fluidized state, and the fluidized bed was heated to 600°C. After the temperature was stabilized, 1 L/min of monosilane was introduced for 60 minutes, and the pressure of the fluidized bed was controlled at 6 kPa. Introduction of the monosilane gas was stopped, and the inert gas was continuously introduced until the reaction product was cooled to room temperature to obtain a silicon-carbon composite material.

Comparative Example 1

In this example, a silicon-carbon composite material was prepared, and the specific preparation process was as follows:

500 g of porous amorphous carbon material with a specific surface area of 1800 $m^2/g$ and a pore volume of 0.68 $cm^3/g$ was added into the fluidized bed, 10 L/min of nitrogen gas was introduced to make the material to achieve a fluidized state, and the fluidized bed was heated to 500°C. After the temperature was stabilized, 1 L/min of monosilane was introduced for 60 minutes, and the pressure of the fluidized bed was controlled at 6 kPa. Introduction of the monosilane gas was stopped, and the inert gas was continuously introduced until the reaction product was cooled to room temperature to obtain a silicon-carbon composite material.

Comparative Example 2

In this example, a silicon-carbon composite material was prepared, and the specific preparation process was as follows:

500 g of porous amorphous carbon material with a specific surface area of 200 $m^2/g$ and a pore volume of 0.4 $cm^3/g$ was added into the fluidized bed, 10 L/min of nitrogen gas was introduced to make the material to achieve a fluidized state, and the fluidized bed was heated to 500°C. After the temperature was stabilized, 1 L/min of monosilane was introduced for 60 minutes, and the pressure of the fluidized bed was controlled at 6 kPa. Introduction of the monosilane gas was stopped, and the inert gas was continuously introduced until the reaction product was cooled to room temperature to obtain a silicon-carbon composite material.

Comparative Example 3

500 g of porous amorphous carbon material with a specific surface area of 1000 $m^2/g$ and a pore volume of 0.12 $cm^3/g$ was added into the fluidized bed, 10 L/min of nitrogen gas was introduced to make the material to achieve a fluidized state, and the fluidized bed was heated to 500°C. After the temperature was stabilized, 1 L/min of monosilane was introduced for 60 minutes, and the pressure of the fluidized bed was controlled at 6 kPa. Introduction of the monosilane gas was stopped, and the inert gas was continuously introduced until the reaction product was cooled to room temperature to obtain a silicon-carbon composite material.

Example 5

In this example, according to the following method, lithium-ion batteries are prepared by using the silicon-carbon composite material in Examples 1 to 4 and Comparative Examples 1 to 3, and the specific steps are as follows:

1. Preparation of positive electrode sheet

The ternary material $LiNi_{0.8}Co_{0.1}Mn_{0.1}O_2$ was stirred and mixed at a high speed to prepare a mixed positive electrode active substance powder. Conductive carbon black (Super P), conductive carbon tube (CNT), nitrogen methyl pyrrolidone solvent (NMP) and polyvinylidene fluoride (PVDF) was dispersed and stirred at a high speed for 2 hours at a mass ratio of 1:0.5:40:1 to prepare a conductive slurry. The mixed active substance powder was mixed with the conductive slurry at high speed to prepare a positive electrode slurry with a certain viscosity. The prepared slurry was uniformly coated on an aluminum foil with a doctor blade, placed in a blast drying oven, and dried at 120°C for 20 minutes. Finally, the dried electrode sheets were rolled and cut to make positive electrode sheets.

2. Preparation of negative electrode sheets

The prepared silicon-based material and graphite with D50 of 10 $\mu$m were stirred and mixed at a high speed with a mass ratio of 40:60 to prepare a blended negative electrode active substance powder, and then fully stirred and mixed with Super P and PAA (polyacrylic acid) in an appropriate amount of deionized water at a mass ratio of 85:5:10 to form a uniform negative electrode slurry. The negative electrode slurry was coated on the surface of the copper foil of the negative electrode current collector, and dried and cold-pressed to obtain a negative electrode sheet.

3. Preparation of electrolyte:

The organic solvent was a mixture of ethylene carbonate (EC), ethyl methyl carbonate (EMC) and diethyl carbonate (DEC), and the volume ratio of EC, EMC and DEC is 20:20:60. In an argon atmosphere glove box with a water content <10 ppm, the fully dried lithium salt ($LiPF_6$) was dissolved in the above organic solvent and evenly mixed to obtain the electrolyte, where the concentration of $LiPF_6$ was 1mol/L.

4. Preparation of isolation film:

12 $\mu$m-thick polypropylene isolation film was selected.

5. Preparation of battery:

The above-prepared positive electrode sheet, separator, and negative electrode sheet were sequentially stacked, so that the separator was placed between the positive and negative electrode sheets to serve the function of isolation. Then aluminum-plastic film was used for wrapping on the outside, and the wrap was transferred to a vacuum oven for drying at 120°C, and injected with an electrolyte solution of 3.0 g/Ah, and then sealed. After standing still, hot and cold pressing, chemical formation, fixtures, and volume separation, finally, a pouch battery (i.e., lithium-ion battery) with a capacity of 1 Ah was prepared.

According to the following method, the silicon carbon composite materials in Examples 1 to 4 and Comparative Examples 1 to 3 were subjected to powder testing, specifically as follows:

1. BET coefficient and pore volume test method:

The sample to be tested (80 mg to 2 g) was placed into the sample tube of the degassing tank, nitrogen was added into the sample tube and heated to 300°C for 1 hour to remove the gas adsorbed on the surface. After the degassing was completed and the sample was cooled to room temperature, the quality of the sample was measured, and the weighed sample tube was loaded into the analysis station. The Dewar was filled with liquid nitrogen and the sample mass was input into the analysis file. The test parameters were set and the adsorption and desorption test process was carried out. The specific surface area, pore volume and other information of the material were calculated by the adsorption-desorption isotherm. Herein, the specific surface area of porous carbon was denoted as $B_A$, and the pore volume was denoted as $P_{v1}$; the specific surface area of silicon-carbon composite material was denoted as $B_a$, and the pore volume was denoted as $P_{v2}$.

2. TG test method:

A 5 mg sample was placed in the sample chamber and heated to 1400°C at a rate of 10 °C/min in an air atmosphere, and the mass versus temperature curve was collected.

The initial mass was recorded as $W_0$, the mass after heating was recorded as $W_1$, and the weight loss was:

$$W\ loss = (W_0 - W_1)/W_0 \times 100\%.$$

Table 1. Powder test result of Examples 1 to 4 and Comparative Examples 1-3

| | $B_A$ (m²/g) | $B_a$ (m²/g) | B | $P_{V1}$ (cm³/g) | $P_{V2}$ (cm³/g) | $P_v = P_{V1}/P_{V2}$ | W loss (%) |
|---|---|---|---|---|---|---|---|
| Example 1 | 1000.0 | 2.5 | 400 | 0.54 | 0.008 | 67.5 | 45 |
| Example 2 | 800 | 4 | 200 | 0.54 | 0.008 | 67.5 | 48 |
| Example 3 | 1000 | 6 | 166 | 0.2 | 0.01 | 20 | 50 |
| Example 4 | 1200 | 2.4 | 500 | 0.7 | 0.14 | 5.0 | 28 |
| Comparative Example 1 | 1800 | 1.5 | 1200 | 0.68 | 0.01 | 68 | 23 |
| Comparative Example 2 | 200 | 4 | 50 | 0.4 | 0.007 | 57.14 | 75 |
| Comparative Example 3 | 2000 | 2.5 | 800 | 0.1 | 0.05 | 2 | 34 |

According to the following methods, the lithium-ion batteries assembled in Example 5 were tested for electrical properties, as follows:

The assembled lithium-ion battery was charged at 1C constant current to 4.2 V, then charged at 4.2 V constant voltage to 0.05C, and left for 10 minutes, then discharged at 1C constant current to 2.8 V, and left for 10 minutes. The above charging and discharging is a cycle of charge and discharge process, the discharge capacity of this cycle was recorded. The charge and discharge process was repeated for 100 cycles, and the discharge capacity of each cycle was recorded.

$$\text{Cycle capacity retention rate (\%)} = 100\text{th cycle discharge capacity/1st cycle discharge}$$

$$\text{capacity} \times 100\%.$$

The mass energy density of the battery (Wh/kg) = the first discharge energy/battery mass.

Table 2. Electrical performance test results of lithium-ion batteries prepared from the powders of Examples 1 to 4 and Comparative Examples 1 to 3

|  | Mass energy density (Wh/kg) | Cycle capacity retention rate (%) |
|---|---|---|
| Example 1 | 320 | 96.3 |
| Example 2 | 318 | 95.4 |
| Example 3 | 315 | 93.2 |
| Example 4 | 332 | 92.3 |
| Comparative Example 1 | 352 | 80.9 |
| Comparative Example 2 | 258 | 95.4 |
| Comparative Example 3 | 300 | 78 |

In Table 1, W loss is mainly from carbon, that is, the content of actual silicon is 1-W loss.

Based on the data analysis in Table 1 and Table 2, it can be seen that in the preparation process of silicon-carbon composite material, the filling amount of silicon is determined depending on the specific surface area and pore volume of porous amorphous carbon. When the specific surface area is large and the pore volume is large, silicon is deposited in the pores. However, excessively large specific surface area and pore volume will lead to large amounts of silicon and poor circulation. When the specific surface area is large and the pore volume is small, silicon is deposited on the surface, which makes circulation difficult. When the specific surface area is small and the pore volume is large, the amount of deposited silicon is limited, and silicon is likely to agglomerate, which makes circulation difficult. When the specific surface area is small and the pore volume is small, silicon cannot be deposited, and the capacity loss is large.

The lithium-ion batteries prepared using the silicon-carbon composite materials of Examples 1 to 4 have higher cycle capacity than the lithium-ion batteries prepared using the silicon-carbon composite materials of Comparative Examples 1 and 3, and their cycle capacity retention rates are both 90% and more. This is because in the preparation process of silicon-carbon composite materials, the filling amount of silicon is determined depending on the specific surface area and pore volume of porous amorphous carbon. When the specific surface area is large and the pore volume is large, silicon is deposited in the pores. However, excessively large specific surface area and pore volume will lead to large amounts of silicon and poor circulation. When the specific surface area is large and the pore volume is small, silicon is deposited on the surface, which makes circulation difficult. When the specific surface area is small and the pore volume is large, the amount of deposited silicon is limited, and silicon is likely to agglomerate, which makes circulation difficult. When the specific surface area is small and the pore volume is small, silicon cannot be deposited, and the capacity loss is large.

Although the lithium-ion battery prepared by using the silicon-carbon composite material of Comparative Example 2 has a cycle capacity retention rate of 95.4%, the mass energy density is much lower than that of Examples 1 to 4. This is because the specific surface area of porous amorphous carbon and the BET coefficient of the composite material is too small, and the active sites where the silicon is introduced into are reduced, resulting in a reduction in the amount of silicon added, and the capacity of the subsequent finished product is low, which makes it difficult to achieve a higher energy density of the battery cell.

Compared with Examples 1 to 4, the thermal decomposition weight loss of the silicon-carbon composite material of Comparative Example 1 is low. Correspondingly, the lithium-ion battery cycle capacity retention rate obtained by using the silicon-carbon composite material of Comparative Example 1 is much lower than that of Example 1 to 4, which is because the content of Si is too high and makes it difficult to achieve a better cycle performance.

To sum up, the embodiments of the disclosure control the structure of the silicon-carbon composite material, the specific surface area coefficient B, the pore volume coefficient $P_v$, the content of various elements and the thermal decomposition weight loss to limit the expansion of the silicon-based material to the greatest possible extent and ensure the long cycle stability and excellent conductive properties thereof, thereby effectively improving the capacity and first effect of the finished material, while maintaining a certain degree of processing performance, and promoting the commercialization process of silicon-based negative electrode materials. In the meantime, the silicon-carbon composite material preparation method provided in the embodiments of the present disclosure is simple and easy to operate, and is suitable for large-scale and industrial production. The silicon-carbon composite material provided in this disclosure may be used as a negative electrode active material and applied to the negative electrode active substance layer to make a negative electrode sheet, which may be combined with the positive electrode sheet, the separator, the electrolyte, etc. to form a lithium-ion battery, which significantly improves the electrical performance of the lithium-ion battery and promotes the development of lithium-ion batteries.

**Claims**

1. A silicon-carbon composite material, comprising an amorphous carbon matrix and a silicon material located on a surface and/or in an interior of the amorphous carbon matrix;
   wherein the silicon-carbon composite material satisfies the following relationship:

$$B=B_A/B_a,$$

   a value range of B is 20 to 1250,
   B is a specific surface area coefficient of the silicon-carbon composite material, $B_A$ is a specific surface area of the amorphous carbon matrix, and $B_a$ is a specific surface area of the silicon-carbon composite material.

2. The silicon-carbon composite material according to claim 1, satisfying at least one of the following conditions (a) to (c):

   (a) the specific surface area coefficient B of the silicon-carbon composite material ranges from 100 to 900;
   (b) the specific surface area $B_A$ of the amorphous carbon matrix ranges from 500 $m^2/g$ to 2500 $m^2/g$;
   (c) the specific surface area $B_a$ of the silicon-carbon composite material ranges from 2 $m^2/g$ to 25 $m^2/g$.

3. The silicon-carbon composite material according to claim 1, satisfying at least one of the following conditions (I) to (II):

   (I) the silicon-carbon composite material satisfies the following relationship:

$$P_v=P_{v1}/P_{v2},$$

   a value range of $P_v$ is 0.4 to 120,
   wherein $P_v$ represents a pore volume coefficient of the silicon-carbon composite material, $P_{v1}$ represents a pore volume size of the amorphous carbon matrix, and $P_{v2}$ represents a pore volume size of the silicon-carbon composite material;

   (II) a thermal decomposition weight loss of the silicon-carbon composite material heated to 1400° C in an air atmosphere ranges from 5% to 60%.

4. The silicon-carbon composite material according to claim 3, satisfying at least one of the following conditions (d) to (f):

   (d) the pore volume coefficient $P_v$ of the silicon-carbon composite material ranges from 1 to 100;
   (e) the pore volume size $P_{v1}$ of the amorphous carbon matrix ranges from 0.2 $cm^3/g$ to 0.9 $cm^3/g$;
   (f) the pore volume size $P_{v2}$ of the silicon-carbon composite material ranges from 0.005 $cm^3/g$ to 0.2 $cm^3/g$.

5. The silicon-carbon composite material according to claim 1, wherein the silicon-carbon composite material further comprises nano-metal particles attached to the surface and/or the in the interior of the amorphous carbon matrix.

6. A method for preparing a silicon-carbon composite material, comprising:
   synthesizing an amorphous carbon matrix material and a silicon source by chemical vapor deposition to obtain a silicon-carbon composite material, wherein the silicon-carbon composite material comprises an amorphous carbon matrix and a silicon material located on a surface and/or in an interior of the amorphous carbon matrix;
   wherein the silicon-carbon composite material satisfies the following relationship:

$$B=B_A/B_a,$$

a value range of B is 20 to 1250,

B is a specific surface area coefficient of the silicon-carbon composite material, $B_A$ is a specific surface area of the amorphous carbon matrix, and $B_a$ is a specific surface area of the silicon-carbon composite material.

7. The method for preparing the silicon-carbon composite material according to claim 6, satisfying at least one of the following conditions (1) to (2):

(1) the silicon source is at least one selected from monosilane, dimethyldichlorosilane, and trichloromethylsilane;
(2) the amorphous carbon matrix material is at least one selected from a porous amorphous carbon and a porous amorphous carbon-metal composite.

8. An electrochemical device, comprising a positive electrode sheet, a negative electrode sheet, an electrolyte and a separator, wherein negative electrode sheet comprises a negative electrode current collector and a negative electrode active substance layer disposed on the negative electrode current collector, the negative electrode active substance layer comprises a negative electrode active material, the negative electrode active material comprises the silicon-carbon composite material according to claim 1.

9. An electronic device, comprising the electrochemical device according to claim 8.

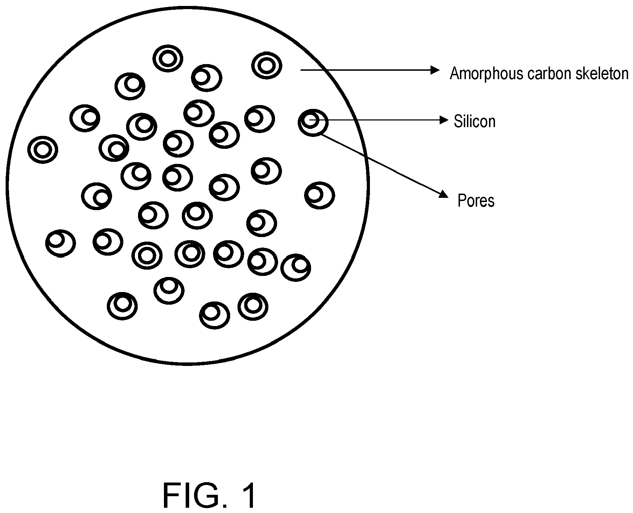

FIG. 1

Europäisches
Patentamt

European
Patent Office

Office européen
des brevets

# EUROPEAN SEARCH REPORT

Application Number

EP 23 21 0512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 994 745 B1 (NEXEON LTD [GB]) 7 September 2022 (2022-09-07) * paragraphs [0011], [0013], [0072], [0073], [0077] * * tables 1,3 * * example 5 * ----- | 1-9 | INV. H01M4/133 H01M4/134 H01M4/1393 H01M4/1395 H01M4/36 H01M4/38 |
| X | CN 115 832 267 A (UNIV CENTRAL SOUTH; HUNAN CHENXING NEW MATERIAL RES INSTITUTE CO LTD) 21 March 2023 (2023-03-21) * claims 1-3 * * paragraphs [0015], [0022], [0017] * * examples 1-3 * ----- | 1,2,6-9 | H01M10/0525 H01M4/02 |
| X | US 2022/399538 A1 (TONEGAWA AKIHISA [JP] ET AL) 15 December 2022 (2022-12-15) * paragraphs [0002], [0446] * ----- | 1,2,6-9 | |

TECHNICAL FIELDS
SEARCHED      (IPC)

H01M

The present search report has been drawn up for all claims

| Place of search | Date of completion of the search | Examiner |
|---|---|---|
| Munich | 18 April 2024 | Galbiati, Ivano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

**EP 4 439 701 A1**

## ANNEX TO THE EUROPEAN SEARCH REPORT
## ON EUROPEAN PATENT APPLICATION NO.

EP 23 21 0512

18-04-2024

| Patent document cited in search report | | Publication date | Patent family member(s) | | Publication date |
|---|---|---|---|---|---|
| EP 3994745 | B1 | 07-09-2022 | CN | 115244734 A | 25-10-2022 |
| | | | EP | 3994745 A1 | 11-05-2022 |
| | | | EP | 4156329 A1 | 29-03-2023 |
| | | | JP | 7323720 B2 | 08-08-2023 |
| | | | JP | 2023179401 A | 19-12-2023 |
| | | | JP | 2023517052 A | 21-04-2023 |
| | | | KR | 20220156964 A | 28-11-2022 |
| | | | KR | 20230121171 A | 17-08-2023 |
| | | | WO | 2022029422 A1 | 10-02-2022 |
| CN 115832267 | A | 21-03-2023 | NONE | | |
| US 2022399538 | A1 | 15-12-2022 | CN | 114728797 A | 08-07-2022 |
| | | | EP | 4060763 A1 | 21-09-2022 |
| | | | KR | 20220101132 A | 19-07-2022 |
| | | | US | 2022399538 A1 | 15-12-2022 |
| | | | WO | 2021095719 A1 | 20-05-2021 |

EPO FORM P0459

For more details about this annex : see Official Journal of the European Patent Office, No. 12/82